# DEMANDE DE BREVET EUROPEEN

(11) **EP 1 992 932 A2**
(43) Date de publication de la demande: **19.11.2008**
(21) Numéro de dépôt: 08290416.0
(22) Date de dépôt: 30.04.2008
(51) Int. Cl.: G01M 17/007, H04B 3/54

(54) **Dispositif de contrôle technique automobile**

(30) Priorité: 30.04.2007 FR 0703141
(71) Demandeur: Actia Muller, 31400 Toulouse (FR)
(72) Inventeur: Marin, Fabrice, 91460 Marcoussis (FR)
(74) Mandataire: Kaspar, Jean-Georges

(57) **Abrégé**

Un dispositif de contrôle technique automobile comporte une pluralité de bancs (2-5) ou postes de contrôle occupés successivement par un contrôleur et un véhicule contrôlé.

Les signaux de mesure ou les informations échangés entre les bancs (2-5) ou postes de contrôle sont transmis par liaison filaire sur le réseau (1) d'alimentation en énergie du dispositif.

## Description

L'invention est relative à un dispositif de contrôle technique automobile.

Le document FR 2.619.232 décrit un équipement d'acquisition et de traitement de données pour centre de contrôle technique automobile qui comprend une pluralité de bancs occupés successivement par un contrôleur et le véhicule contrôlé pour effectuer divers tests de ripage, de suspension, de freinage avant et arrière, de braquage, de vérification des équipements lumineux, de vérification antipollution...

L'équipement du document FR 2.619.232 utilise des boîtiers de télécommande munis d'un clavier à touches pour valider des mesures ou informations transmises à une unité centrale informatisée de concentration des mesures. Ces boîtiers de télécommande peuvent être utilisés en mode de télécommande ou en mode de télémesure.

Le document FR 2.769.732 décrit un système de contrôle de véhicule automobile comportant en combinaison au moins un banc de freinage et un banc de géométrie associés entre eux par l'intermédiaire d'un système d'exploitation recevant des mesures effectuées par des capteurs situés dans les bancs associés, de manière à minimiser le nombre d'opérations ou de mesures à effectuer.

Le document EP 894.255 B1 décrit un procédé et un dispositif pour commander un système d'essai de véhicules automobiles.

Le document EP 0.793.086 B1 décrit un procédé et un système de contrôle pour contrôler des véhicules automobiles, en utilisant des transpondeurs pour effectuer une communication sans fil de données.

Le document EP 1.180.674 B1 décrit un système de communication de données pour bancs d'essai en vue de tester les véhicules automobiles.

Le document EP 0.602.920 B1 décrit un procédé et un système pour reconnaître un véhicule et afficher des informations de diagnostic.

Les procédés, systèmes et dispositifs connus de contrôle technique automobile présentent ainsi des moyens différents de transmission des données recueillies par passage du véhicule dans divers bancs de contrôle.

Cependant, les solutions techniques existantes présentent plusieurs inconvénients : une portée limitée, un risque de perturbation électromagnétique par la structure métallique des bâtiments abritant le centre de contrôle technique, une difficulté d'installation dans le cas de câblage complexe, ainsi qu'une absence de sécurité en cas de piratage des données.

Il apparaît actuellement dans les centres existants de contrôle technique automobile un besoin de mise en réseau pour effectuer la connexion simultanée de tous les appareils, sans limitation de leur nombre. La flexibilité des installations de contrôle technique automobile est également souhaitée pour permettre le déplacement d'appareils existants ou l'addition future de nouveaux appareils de mesure adaptés aux spécifications à venir du contrôle technique automobile.

Un premier but de l'invention est de fournir un nouveau dispositif de contrôle technique automobile remédiant aux inconvénients de l'art antérieur.

Un deuxième but de l'invention est de fournir un nouveau dispositif de contrôle technique automobile permettant la rénovation des installations existantes.

L'invention a pour objet un dispositif de contrôle technique automobile, du type comportant une pluralité de bancs ou postes de contrôle occupés successivement par un contrôleur et un véhicule contrôlé, caractérisé par le fait que les signaux de mesure ou les informations échangés entre les bancs ou postes de contrôle sont transmis par liaison filaire sur le réseau d'alimentation en énergie du dispositif.

Selon d'autres caractéristiques alternatives de l'invention :
- le réseau d'alimentation en énergie du dispositif qui transmet lesdits signaux de mesure ou lesdites informations est un réseau d'alimentation en énergie électrique.
- le réseau d'alimentation en énergie électrique est isolé de l'extérieur par un filtre empêchant un piratage ou une éventuelle perturbation.
- le réseau d'alimentation en énergie électrique est isolé de l'extérieur par un compteur électrique formant filtre, de manière à empêcher un piratage ou une éventuelle perturbation.
- les signaux de mesure ou les informations échangés entre les bancs ou postes de contrôle sont transmis par une technologie (CPL) de courant porteur en ligne à haut débit.
- des signaux de mesure ou des informations échangés avec un banc ou poste de contrôle muni d'une connexion par liaison série (RS232) transitent par un boîtier ou une combinaison de boîtiers effectuant la conversion des données et informations en une suite de trames aptes à être transmises par une technologie (CPL) de courant porteur en ligne.
- la combinaison de boîtiers comporte un premier boîtier de conversion à la norme Ethernet et un deuxième boîtier de conversion à une technologie (CPL) de courant porteur en ligne.
- le dispositif comporte un écran de visualisation et de répétition portant un microordinateur possédant au moins une sortie compatible avec la norme Ethernet et relié à un boîtier de conversion à une technologie (CPL) de courant porteur en ligne.
- le dispositif comporte une unité centrale automatisée de concentration des données reliée par une technologie (CPL) de courant porteur en ligne à un ordinateur spécifique.
- le dispositif comporte au moins un boîtier de télécommande dédié à des fonctions de télécommande.

L'invention sera mieux comprise grâce à la description qui va suivre donnée à titre d'exemple non limitatif en référence aux dessins annexés dans lesquels :
La figure 1 représente schématiquement un dispositif de contrôle technique automobile selon l'invention.
La figure 2 représente schématiquement un appareil de mesure de gaz ou d'opacimétrie faisant partie d'un dispositif de contrôle technique automobile selon l'invention.
La figure 3 représente schématiquement un appareil de réglage des équipements lumineux faisant partie d'un dispositif de contrôle technique automobile selon l'invention.
La figure 4 représente schématiquement un écran de visualisation et de répétition d'informations faisant partie d'un dispositif de contrôle technique automobile selon l'invention.
La figure 5 représente schématiquement une unité centrale automatisée de concentration des données faisant partie d'un système de contrôle technique automobile selon l'invention.

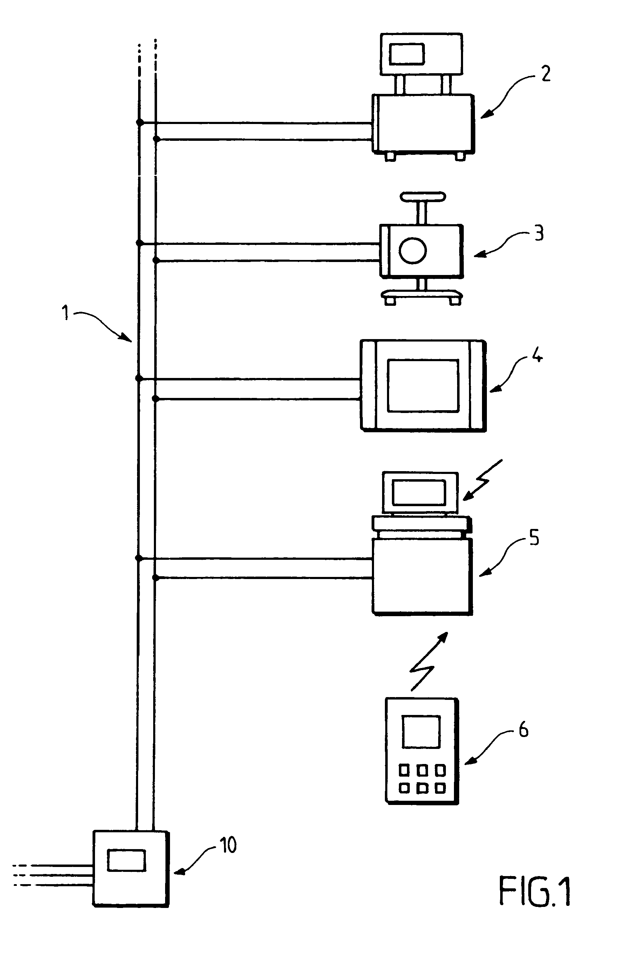

En référence aux figures 1 à 5, les éléments identiques ou fonctionnellement équivalents sont repérés par des chiffres de référence identiques.

Sur la figure 1, un réseau 1 d'alimentation électrique dérivant d'un compteur 10 électrique est destiné à alimenter un appareil 2 de mesure de gaz ou d'opacimétrie, un appareil 3 de réglage des équipements lumineux, un écran 4 de visualisation et de répétition des informations et une unité centrale 5 automatisée de concentration de données.

Les appareils 2 à 5 sont alimentés par le même réseau 1 électrique d'alimentation, par exemple sous une alimentation alternative biphasée de 220 Volts.

Un boîtier 6 de télécommande peut être prévu pour assurer une liaison sans fil de télécommande avec l'unité centrale 5, ou avec d'autres équipements du centre de contrôle technique automobile équipés d'émetteurs et de récepteurs de communication sans fil.

Cependant, chaque boîtier 6 de transmission sans fil est dédié à la télécommande, de sorte que chaque boîtier 6 de transmission sans fil n'effectue aucune télémesure, contrairement à l'art antérieur.

La transmission des données s'effectue ainsi par transmission filaire, avantageusement par l'utilisation du réseau 1 d'énergie électrique.

A cet effet, selon l'invention, des moyens de transmission de données par le réseau 1 d'énergie électrique sont prévus pour assurer la circulation des données entre chaque poste de contrôle et l'unité centrale automatisée 5 de concentration des données, en tenant compte de l'identité du véhicule contrôlé à chaque poste.

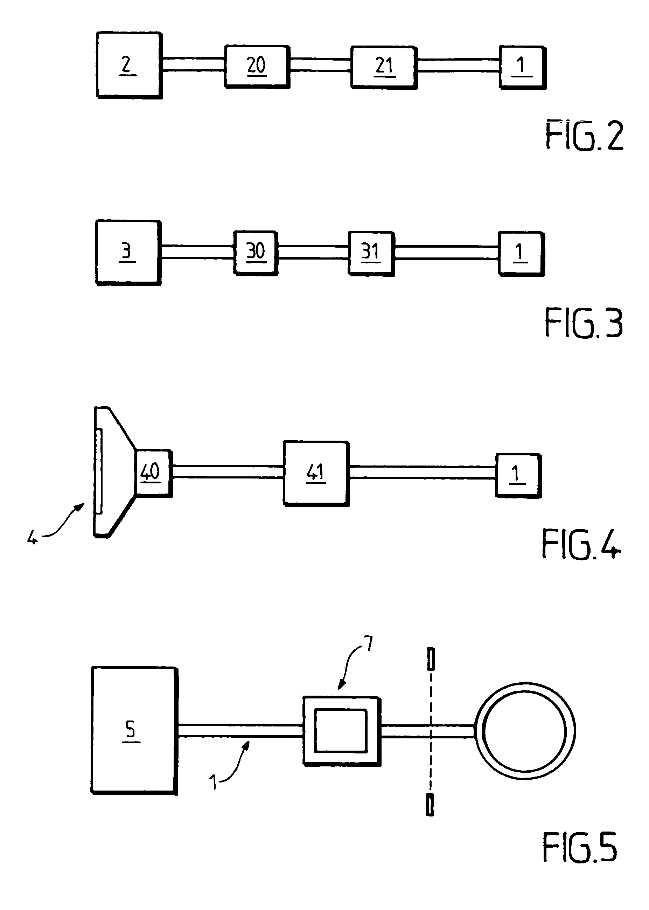

Sur la figure 2, un appareil 2 de mesure des gaz et d'opacimétrie est connecté à un boîtier 20 permettant la transformation de données transmises par liaison série (RS 232) en une chaîne de données compatible avec la norme de réseau dite « Ethernet ».

Le boîtier 20 est connecté à un boîtier 21 effectuant la conversion des données selon la norme « Ethernet » en une suite de trames permettant une transmission de données par la technologie de courant porteur en ligne.

A titre d'exemple, on peut utiliser comme boîtier 20, un boîtier fabriqué et commercialisé par la Société LAVA de Droit canadien sous la référence ETHER-SERIAL LINK.

A titre d'exemple également, on peut utiliser comme boîtier 21, un boîtier vendu par la Société DEVOLO de Droit allemand sous la référence dLAN 200 AV.

Sur la figure 3 un appareil de réglage des équipements lumineux appelé « réglephare » est connecté à un boîtier 30 de conversion de données communiquées par liaison série (RS 232) en une suite de données compatibles avec la norme « Ethernet ».

Le boîtier 30 est connecté à un boîtier 31 de conversion des données selon la norme « Ethernet » en une suite de trames permettant une transmission de données par la technologie de courant porteur en ligne.

A titre d'exemple, on peut utiliser comme boîtier 30, un boîtier fabriqué et commercialisé par la Société de Droit canadien LAVA sous la référence ETHER-SERIAL LINK.

A titre d'exemple, on peut utiliser comme boîtier 31, un boîtier vendu par la Société DEVOLO de Droit allemand sous la référence dLAN 200 AV.

Sur la figure 4, un écran de visualisation et de répétition des informations 4 comporte une broche de connexion vidéo dite VESA, sur laquelle est embroché un micro-ordinateur 41 de dimensions réduites.

Le micro-ordinateur 40 est un ordinateur pourvu de fiches de sorties série (RS232) et de fiches de sorties LAN compatibles avec la norme « Ethernet ».

L'avantage du micro-ordinateur 40 est de permettre la suppression du câble vidéo entre l'écran principal de l'unité centrale 5 automatisée de concentration des données et de supprimer également l'amplificateur de signal vidéo nécessaire dans l'art antérieur.

Le micro ordinateur 40 est par exemple un micro-ordinateur fabriqué et commercialisé par la Société ALKEV sous la référence ALK-2300.

Une fiche de sortie LAN du micro-ordinateur 40 est connectée à un boîtier 41 de conversion des données selon la norme « Ethernet » en une suite de trames permettant une transmission de données par la technologie de courant porteur en ligne.

A titre d'exemple, on peut utiliser comme boîtier 40, un boîtier fabriqué et commercialisé par la Société de Droit canadien LAVA sous la référence ETHER-SERIAL LINK.

A titre d'exemple, on peut utiliser comme boîtier 41, un boîtier vendu par la Société DEVOLO de Droit allemand sous la référence dLAN 200 AV.

Sur la figure 5, une unité centrale 5 automatisée de concentration des données et informations reçoit par le réseau électrique les données et informations transmises par la technologie de courant porteur en ligne et transmet, après concentration de ces données et informations, une suite ordonnée d'informations correspondant à chaque véhicule contrôlé.

Cette suite ordonnée d'informations est de préférence transmise par la technologie dite de courant porteur en ligne à un ordinateur bureautique 7 qui met en forme des ensembles de fichiers par véhicule pour les transmettre en temps réel ou à intervalles réguliers à une autorité réglementaire centrale gérant les registres des mesures réalisées et permettant ainsi d'adapter les normes réglementaires de contrôle technique automobile à l'état du parc automobile considéré.

Grâce à l'invention, la transmission des données techniques correspondant aux véhicules contrôlés est effectuée par liaison filaire sans risque de piratage ni de perturbation électromagnétique.

La technologie de courant porteur en ligne également connue sous l'appellation « CPL » ou « Courants Porteurs en Ligne » désigne toute technologie qui vise à faire passer de l'information à bas débit ou à haut débit sur les lignes électriques en utilisant des techniques de modulation avancées.

En utilisant la technologie CPL à haut débit, on fait passer des données informatiques sur le réseau électrique, et on peut ainsi étendre un réseau local existant ou partager un accès Internet existant via les prises électriques grâce à la mise en place de boîtiers spécifiques.

Une technologie CPL à haut débit consiste à superposer au signal électrique alternatif de l'alimentation électrique un autre signal de faible énergie et à plus haute fréquence comprise dans la bande de 1,6 à 30 Mhz. Ce signal de faible énergie se propage sur l'installation électrique et peut être reçu et décodé à distance. Ainsi un signal CPL est reçu par tout récepteur CPL qui se trouve sur le même réseau électrique.

Un coupleur intégré en entrée des récepteurs CPL élimine les composantes de basse fréquence de l'alimentation électrique avant le traitement du signal.

Un standard de technologie CPL à haut débit connu est le standard américain appelé « Homeplug V1.0.1 ».

La technologie CPL à haut débit de courant porteur en ligne utilisée permet une installation dans des centres de contrôle existants démunis d'un réseau de transmission de données, sans limitation du nombre d'appareils connectés et en permettant le déplacement des appareils et l'addition future de nouveaux appareils répondant aux nouvelles spécifications de contrôle technique.

La portée des signaux transférés par le courant porteur en ligne est supérieure à 200 mètres de sorte qu'aucun moyen d'amplification additionnelle n'est nécessaire.

Le transformateur situé en dehors d'un centre de contrôle technique n'empêche pas le signal de données de transiter hors du centre de contrôle technique.

Pour que les données locales du centre de contrôle technique soient sécurisées, il est possible d'effectuer le cryptage de ces données locales. Les signaux CPL s'arrêtent aux compteurs électriques, dans le cas de compteurs numériques. Toutefois, dans le cas de compteurs "bleus" ou "de Foucault", les signaux CPL sont susceptibles de de transiter hors du centre de contrôle technique, ce qui conduit à placer un filtre d'isolation en aval du compteur.

Le réseau électrique transmettant les données de technologie de courant porteur en ligne peut ainsi être protégé par adjonction d'un filtre d'isolation sur le réseau d'alimentation électrique, ou par le compteur électrique 10, dans le cas où celui-ci est muni d'un tel filtre ou constitue naturellement un tel filtre.

L'invention décrite en référence à un mode de réalisation particulier n'y est nullement limitée, mais couvre au contraire toute modification de forme et toute variante de réalisation dans le cadre et l'esprit de l'invention.

Ainsi, notamment, tout boîtier cité à titre d'exemple, fabriqué et commercialisé par la Société LAVA de Droit canadien sous la référence ETHER-SERIAL LINK, peut être remplacé par un moyen fonctionnellement équivalent dans le cadre et l'esprit de l'invention..

Ainsi, notamment, tout boîtier cité à titre d'exemple, fabriqué et commercialisé par la Société DEVOLO de Droit allemand sous la référence dLAN 200 AV., peut être remplacé par un moyen fonctionnellement équivalent dans le cadre et l'esprit de l'invention..

En outre, notamment, toute association de boîtiers cités à titre d'exemple, fabriqués et commercialisés par la Société LAVA de Droit canadien sous la référence ETHER-SERIAL LINK, et de boîtiers cités à titre d'exemple, fabriqués et commercialisés par la Société DEVOLO de Droit allemand sous la référence dLAN 200 AV., peut être remplacée par un moyen fonctionnellement équivalent dans le cadre et l'esprit de l'invention.

## Revendications

1. Dispositif de contrôle technique automobile, du type comportant une pluralité de bancs (2-5) ou postes de contrôle occupés successivement par un contrôleur et un véhicule contrôlé, **caractérisé par le fait que** les signaux de mesure ou les informations échangés entre les bancs (2-5) ou postes de contrôle sont transmis par liaison filaire sur le réseau (1) d'alimentation en énergie du dispositif.

2. Dispositif selon la revendication 1 **caractérisé par le fait que** le réseau (1) d'alimentation en énergie du dispositif qui transmet lesdits signaux de mesure ou lesdites informations est un réseau (1) d'alimentation en énergie électrique.

3. Dispositif selon la revendication 2 **caractérisé par le fait que** le réseau (1) d'alimentation en énergie électrique est isolé de l'extérieur par un filtre empêchant un piratage ou une éventuelle perturbation.

4. Dispositif selon la revendication 2 **caractérisé par le fait que** le réseau (1) d'alimentation en énergie électrique est isolé de l'extérieur par un compteur électrique (10) formant filtre, de manière à empêcher un piratage ou une éventuelle perturbation.

5. Dispositif selon l'une quelconque des revendications 1 à 4, **caractérisé par le fait que** les signaux de mesure ou les informations échangés (2-5) entre les bancs ou postes de contrôle sont transmis par une technologie (CPL) de courant porteur en ligne à haut débit.

6. Dispositif selon la revendication 5 **caractérisé par le fait que** des signaux de mesure ou des informations échangés avec un banc (2,3)ou poste de contrôle muni d'une connexion par liaison série (RS232) transitent par un boîtier ou une combinaison de boîtiers (20-21, 30-31) effectuant la conversion des données et informations en une suite de trames aptes à être transmises par une technologie (CPL) de courant porteur en ligne.

7. Dispositif selon la revendication 6 **caractérisé par le fait que** la combinaison (20-21, 30-31) de boîtiers comporte un premier boîtier (20,30) de conversion à la norme Ethernet et un deuxième boîtier (21-31) de conversion à une technologie (CPL) de courant porteur en ligne.

8. Dispositif selon la revendication 5 **caractérisé par le fait que** le dispositif comporte un écran (4) de visualisation et de répétition portant un microordinateur (40) possédant au moins une sortie compatible avec la norme Ethernet et relié à un boîtier (41) de conversion à une technologie (CPL) de courant porteur en ligne.

9. Dispositif selon la revendication 5 **caractérisé par le fait que** le dispositif comporte une unité centrale (5) automatisée de concentration des données reliée par une technologie (CPL) de courant porteur en ligne à un ordinateur (7) spécifique.

10. Dispositif selon l'une quelconque des revendications précédentes **caractérisé par le fait que** le dispositif comporte au moins un boîtier (6) de télécommande dédié à des fonctions de télécommande.
